(19) **Europäisches Patentamt**

**European Patent Office**

**Office européen des brevets**

(11) **EP 0 783 215 B1**

(12) **FASCICULE DE BREVET EUROPEEN**

(45) Date de publication et mention
de la délivrance du brevet:
**24.04.2002  Bulletin 2002/17**

(51) Int Cl.⁷: **H04L 9/00**, H04B 10/12,
H04K 1/02

(21) Numéro de dépôt: **97400004.4**

(22) Date de dépôt: **02.01.1997**

(54) **Système de transmission optique mettant en oeuvre un cryptage par chaos déterministe**

Optisches Übertragungssystem mit Verschlüsselung auf Basis von deterministischem Chaos

Optical transmission system using encryption based on deterministic chaos

(84) Etats contractants désignés:
**DE GB**

(30) Priorité: **05.01.1996  FR 9600084**

(43) Date de publication de la demande:
**09.07.1997  Bulletin 1997/28**

(73) Titulaire: **FRANCE TELECOM**
**75015 Paris (FR)**

(72) Inventeurs:
• **François, Pierre-Luc**
**22300 Lannion (FR)**
• **Porte, Henri**
**25770 Serre les Sapins (FR)**
• **Goedgebuer, Jean-Pierre**
**22115 Pouilley les Vignes (FR)**
• **Larger, Laurent**
**25000 Besançon (FR)**

(74) Mandataire: **Martin, Jean-Jacques**
**Cabinet Régimbeau**
**20, rue de Chazelles**
**75847 Paris cedex 17 (FR)**

(56) Documents cités:
• **IEEE TRANSACTIONS ON CIRCUITS AND SYSTEMS I: FUNDAMENTAL THEORY AND APPLICATIONS, vol. 42, no. 8, 1 Août 1995, pages 455-463, XP000526247 CELKA P: "CHAOTIC SYNCHRONIZATION AND MODULATION OF NONLINEAR TIME-DELAYED FEEDBACK OPTICAL SYSTEMS"**
• **ELECTRONICS LETTERS, 21 JULY 1994, UK, vol. 30, no. 15, ISSN 0013-5194, pages 1203-1204, XP000461656 SHORE K A ET AL: "Improved synchronisation algorithm for chaotic communications systems"**

**Description**

La présente invention est relative aux systèmes de transmission optique mettant en oeuvre un cryptage par chaos déterministe.

L'évolution très rapide des systèmes de télécommunication par réseau publique de fibre optique s'accompagne de la circulation sur ce même réseau, d'informations à caractère privé ou commercial. Il est donc indispensable de disposer de moyens de codage en vue de la protection de ces informations à distribution sélective. Généralement, le cryptage de signaux s'effectue à partir de codes bien spécifiques générés à partir d'algorithmes mathématiques. Ces méthodes sont réservées à des signaux possédant un haut degré de confidentialité, mais présentent l'inconvénient, du fait de leur complexité au niveau du codage et du décodage, de ne pouvoir être utilisées que pour des débits de transmission relativement faibles (environ quelques dizaines de kbits/s). Certaines applications telles que, par exemple, la télédistribution payante d'informations ou de canaux TV, se satisfont d'un degré de sécurité beaucoup moins important, qui doit être suffisant toutefois pour assurer une protection contre des intrus disposant de moyens ordinaires de détection. Les besoins, dans ce dernier cas, sont alors de disposer d'un dispositif de cryptage à bas coût, fiable, reconfigurable de façon simple par changement rapide de la clé de cryptage, et pouvant s'adapter à des débits d'information élevés.

Le dispositif proposé a pour objet de répondre à ces besoins.

Il a déjà été proposé d'utiliser les phénomènes de chaos déterministe pour le cryptage de communications radiofréquences.

On pourra à cet égard avantageusement se référer aux publications :

[1] L. Pecora, "Overview of chaos and communications research", SPIE, Vol. 2038, p. 2, 1993 ;
[2] S. Hayes, C. Grebogi & E. Ott "Communicating with Chaos", Phys. Rev. Lett., Vol. 70, p. 3031, 1993.

Les systèmes de génération de chaos utilisés à cet effet sont des systèmes électroniques dans lesquels les non linéarités sont produites par des diodes ou encore par des comparateurs à seuil et à hystérésis.

Les phénomènes de chaos ont par ailleurs également été étudiés sur des systèmes optiques différentiels à retard non linéaires, qui utilisent comme variable dynamique optique la puissance lumineuse du signal.

On pourra à cet égard se reporter aux publications :

[3] P. Celka, "Chaotic synchronization and modulation of nonlinear time-delayed feedback optical systems", IEEE, Transaction on Circuit and Systems, Vol. 42, n° 8, p. 1, 1995 ;
[4] Takizawa, Liu & Ohtsubo, "Chaos in a feedback Fabry-Pérot Interferometer", IEEE Journal of Quantum Electronics, Vol. 30, N° 2, p. 334, 1994.

Il a également été proposé un procédé de synchronisation utilisant une contre-réaction sur un paramètre dynamique du signal lumineux, par exemple la phase du signal lumineux.

On pourra à cet égard se reporter à l'article suivant :

[7] K.A. Shore et D.T. Wright, « Improved synchronisation algorithm for chaotic communications systems », Electronics Letters, Vol.30, p.1203-1204, 1994.

L'invention propose quant à elle un système de transmission optique utilisant un cryptage par chaos sur la variable de longueur d'onde.

Plus particulièrement, l'invention propose un système pour la transmission d'un signal optique porteur d'informations, comportant :

- des moyens pour l'émission d'un signal optique crypté, qui comprennent des moyens pour la génération d'un chaos déterministe, ainsi que des moyens pour le codage du signal porteur d'informations, par ce chaos déterministe,
- une ligne pour la transmission du signal ainsi crypté,
- des moyens de réception qui comprennent des moyens pour la génération d'un chaos déterministe, ainsi que des moyens pour la synchronisation de ce chaos sur le signal crypté reçu et pour le décryptage dudit signal crypté,

caractérisé en ce que le chaos est un chaos en longueur d'onde, les moyens de génération de chaos comportant une source lumineuse accordable en longueur d'onde, ainsi qu'une boucle de contre-réaction du signal lumineux en sortie de ladite source sur la commande d'accord en longueur d'onde, ladite boucle comportant des moyens de conversion non linéaires de la longueur d'onde, ainsi qu'une ligne à retard.

Un tel système exploite les caractéristiques dynamiques d'un chaos déterministe, caractéristiques qui sont globalement aléatoires, et localement tout à fait déterministes.

On notera en outre qu'un tel cryptage est adapté à des débits d'informations élevés.

Le degré de confidentialité qu'il assure est suffisant pour qu'un usager disposant de moyens de détection considérés comme "ordinaires" n'arrive pas à casser la clé de cryptage à partir de la connaissance des propriétés statistiques du chaos utilisé pour le codage.

L'invention a également pour objet un dispositif d'émission et/ou de réception d'un tel système de transmission.

D'autres avantages et caractéristiques de l'invention ressortiront encore de la description qui suit. Cette description est purement illustrative et non limitative. Elle doit être lue en regard des dessins annexés sur lesquels :

- la figure 1 est un schéma de principe illustrant un système conforme à un mode de réalisation possible pour l'invention ;
- la figure 2 illustre un mode de réalisation possible pour un générateur de chaos en longueur d'onde ;
- la figure 3 est un graphe sur lequel on a porté un exemple de courbe de non linéarité pour l'élément non-linéaire du générateur de la figure 2 ;
- la figure 4 illustre un mode de réalisation possible pour les moyens de réception du système de transmission de la figure 1 ;
- la figure 5 représente schématiquement un système de transmission conforme à un mode de réalisation possible de l'invention, mettant en oeuvre une modulation de phase d'un signal de chaos en longueur d'onde ;
- la figure 6 illustre un autre mode de réalisation possible pour un générateur de chaos en longueur d'onde ;
- la figure 7 est un graphe sur lequel on a porté un exemple de chaos de longueur d'onde en fonction du temps ;
- la figure 8, enfin, est un système de transmission multicanal conforme à l'invention.

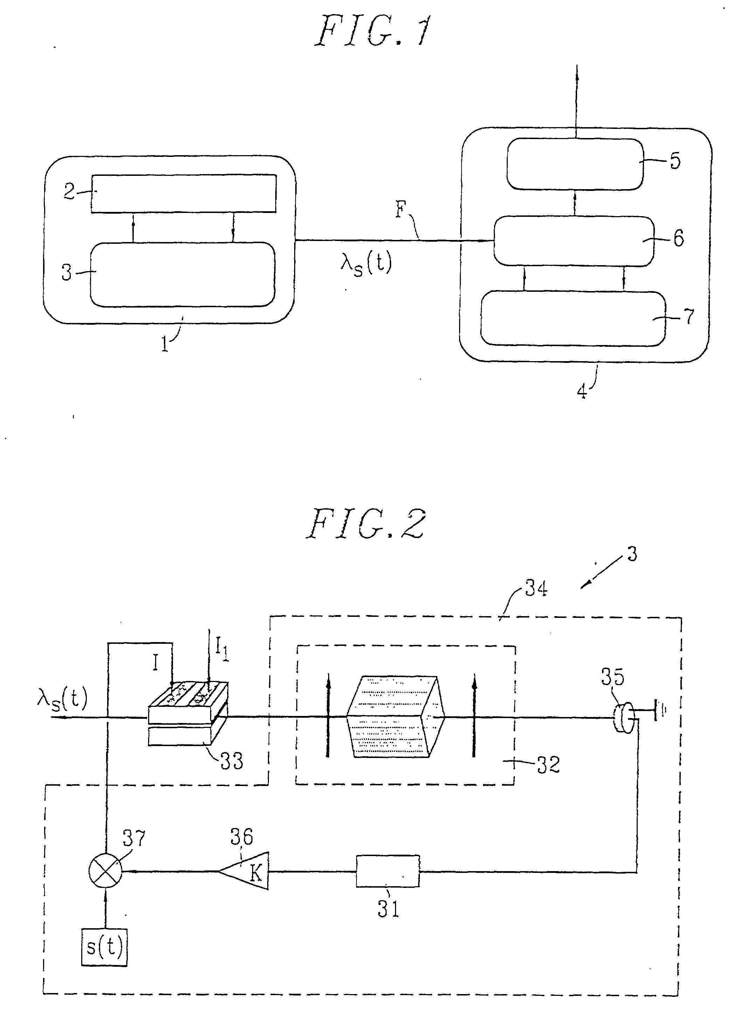

Le système de transmission optique illustré sur la figure 1 comporte des moyens d'émission 1, ainsi que des moyens de réception 4 entre lesquels le signal optique $\lambda s(t)$ portant l'information cryptée est véhiculé par une fibre F.

Les moyens d'émission 1 comportent un générateur de chaos en longueur d'onde 3 ainsi qu'un système de codage 2, permettant de mélanger un signal $s(t)$ porteur d'informations au signal chaotique en longueur d'onde ainsi généré. Bien entendu, le signal $s(t)$ peut être aussi bien un signal analogique qu'un signal binaire.

Les moyens de réception 4 comprennent un générateur de chaos 7 semblable en totalité ou partie au générateur 3, des moyens 6 pour la synchronisation du chaos local avec le chaos reçu, ainsi que des moyens de décodage 5, qui comportent généralement des moyens en commun avec les moyens de synchronisation 6.

Les générateurs de chaos 3 et 7 sont des sources lumineuses, commandées de façon à émettre un signal dont la longueur d'onde $\lambda(t)$ possède un comportement dynamique chaotique. Cette longueur d'onde $\lambda(t)$ varie en amplitude entre une longueur d'onde $\lambda_1$ et une longueur d'onde $\lambda_2$, correspondant par exemple à une largeur de bande optique de l'ordre de quelques Angströms.

Les variations de $\lambda(t)$ étant chaotiques, le signal présente un spectre de type bruit blanc dans la bande de fréquence habituellement utilisée pour transmettre les débits d'information des télécommunications optiques (de 100 Mbit/s à 10 Gbit/s).

L'aspect global pseudo aléatoire que le chaos confère à la longueur d'onde $\lambda(t)$ assure le cryptage du signal $s(t)$.

Par ailleurs, étant donné que le chaos possède localement dans le temps des caractéristiques dynamiques déterministes, le décodage du signal crypté est possible, dès lors que l'on dispose à la réception de la même dynamique déterministe, c'est-à-dire des éléments constitutifs du générateur de chaos en longueur d'onde.

L'évolution temporelle des longueurs d'onde (ou, ce qui revient au même, des nombres d'onde $\sigma = 1/\lambda$) est régie par une équation différentielle à retard du type :

$$\sum_{n=0}^{\infty} \alpha_n \frac{d^n}{(dt)^n} \sigma(t) = NL \left\{ \sigma(t-T) \right\} \qquad (1)$$

où $\alpha_n$ représente des coefficients propres à la dynamique du système,

$$\frac{d^n}{(dt)^n}$$

représente la dérivée $n^{ième}$ par rapport au temps de la variable $\sigma(t)$,

NL représente une fonction non linéaire de la variable σ(t),

T est un retard temporel.

Les solutions de cette équation sont de type chaotique : les nombres d'ondes σ solutions de cette équation sont pseudo-aléotoires ; leur spectre de fréquences s'apparente à celui d'un bruit blanc.

Par exemple, dans le cas où les dérivées d'ordre deux et supérieures à deux ont des coefficients nuls, l'équation précédente prend la forme d'une équation dite d'Ikeda :

$$\sigma(t) + \tau \bullet \frac{d\sigma(t)}{dt} = NL\{\sigma(t\text{-}T)\} \tag{2}$$

où $\tau$ représente la constante de temps du système.

L'évolution temporelle de σ(t) est chaotique.

La fonction non linéaire NL $\{\sigma(t\text{-}T)\}$ peut être quelconque. Par exemple, et sans que ceci soit limitatif, la figure 2 illustre le cas d'un système dans lequel la fonction non linéaire est sinusoïdale et s'écrit :

$$NL\ \{\sigma(t\text{-}T)\} = \pi[A - \mu \sin^2\{M \bullet \sigma(t\text{-}T)\}] \tag{3}$$

Le modèle d'Ikeda a fait l'objet de nombreuses études. On pourra à cet égard avantageusement se référer aux publications :

[5] K.Ikeda,"Multiple-valued stationnary state and its instability of the transmitted light by a ring cavity system", Opt. Commun., Vol. 30, N° 2 (p 257), 1979 ;

[6] F.A. Hopf, D.L. Kaplan, H.M. Gibbs et R.L. Sxhoemaker, "Bifurcations to chaos in optical bistability", Phys. Rev. A, Vol. 25, N°4 (p.2172), 1982.

Selon ce modèle, le nombre d'onde σ(avec σ = 1/λ) émis à un instant t obéit à l'équation suivante :

$$\sigma(t) + \tau \bullet \frac{d\sigma}{dt}(t) = N.L.[\sigma(t\text{-}T)] = \pi \bullet [A - \mu \bullet \sin^2\{M \bullet \sigma(t\text{-}T)\}]$$

où $\tau$ est la constante de temps limitative du dispositif, T est un retard temporel au moins deux fois plus grand que $\tau$, A est un paramètre propre au système, $\mu$ est le paramètre de bifurcation, et M est un paramètre qui caractérise la périodicité de la non linéarité, qui est par exemple de type sinusoïdal. Ce paramètre M est lié à la plage spectrale ($[\lambda_1, \lambda_2]$) à l'intérieur de laquelle la longueur d'onde λ(t) varie.

On a illustré sur la figure 2 un mode de réalisation possible pour les générateurs de chaos 3 et 7.

Le générateur de chaos illustré sur cette figure 2 comporte une diode d'émission laser 33 accordable en longueur d'onde, ainsi qu'une boucle opto-électronique 34 pour la commande de cette diode laser 33.

La diode laser 33 est une diode laser multisegments commandée en courant, par exemple de type DFB. On a représenté sur la figure 2 deux électrodes de commande de cette diode 33, l'une pour la commande de sa couche active (courant $I_1$), l'autre pour la commande du décalage en longueur d'onde (courant I).

La boucle 34 comporte un élément optique 32 non linéaire en longueur d'onde, qui est traversé par un faisceau émis par la diode 33, ainsi qu'un photodétecteur 35 recevant le signal optique en sortie de l'élément non linéaire 32.

Le courant de sortie du photodétecteur 35 est envoyé, par l'intermédiaire d'une ligne 31 à retard et d'un amplificateur 36, sur une électrode de commande de la diode d'émission 33.

L'élément non linéaire 32 est un élément d'absorption ou d'émission à extrema en fonction de la longueur d'onde, par exemple un filtre biréfringent, ou encore un interféromètre Fabry Pérot ou de Mach Zender, un interféromètre à deux ondes, un interféromètre à ondes multiples.

Un tel élément présente l'avantage de permettre de réaliser la non-linéarité de façon très simple.

La puissance lumineuse $P_\lambda(t)$ en sortie dudit élément optique 32 varie en fonction de la longueur d'onde d'entrée selon une courbe non linéaire avec extremum.

Un exemple de non linéarité sinusoïdale en longueur d'onde a été illustré sur la figure 3.

L'accordabilité en longueur d'onde de la source laser 33 couvre un lobe de la non linéarité. Par exemple, dans le cas où la source 33 est une diode laser multisegment accordable en longueur d'onde sur un intervalle spectral large de 20 Å autour de $\lambda_0 = 1,54$ μm, l'élément non linéaire 32 peut être un filtre biréfringent de retard optique 10 mm (périodicité $2\pi(\lambda_0)^2/M$ de 2,4 Å, lobe de 1 Å environ).

Dans l'exemple illustré sur la figure 2, la ligne à retard électronique 31 est de type électronique. Elle pourrait être bien entendu également réalisée par une certaine longueur de fibre optique située entre la diode laser 33 et le photodétecteur 35.

La constante de temps τ de la boucle qui vient d'être définie dépend de l'élément dynamique le plus lent de ladite boucle, c'est à dire principalement du temps de réaction de son électronique (τ = 1 à 2 ns).

Une condition d'obtention du régime chaotique est que T soit au moins égal à 2τ. La bande de fréquence dynamique du chaos (bruit de codage) couvre alors typiquement une bande de 500 MHz environ. Tout signal informatif à mélanger à ce chaos, devra posséder un spectre de Fourier dans cette bande pour pouvoir être crypté.

Le mélange du signal s(t) porteur d'informations et du chaos peut se faire par sommation sur un des courants I et $I_1$. On a représenté sur la boucle de la figure 2 un sommateur 37 par lequel le photocourant en sortie de l'amplificateur 36 est mélangé à un courant porteur du signal s(t).

En variante encore, le signal s(t) peut être mélangé au chaos par modulation de la caractéristique de non linéarité de l'élément 32, par exemple en appliquant un champ électrique sur celui-ci, pour déplacer la position du maximum sur la courbe non linéarité.

En variante encore, ce mélange peut être réalisé par modulation du gain K de l'amplificateur 36.

La figure 4 illustre un mode de réalisation possible des moyens de réception 4 du signal en sortie des moyens d'émission de la figure 2.

Le chaos en longueur d'onde $\lambda_s$(t) contenant le signal codé est comparé avec le chaos provenant du générateur de chaos local 7.

A cet effet, les moyens de réception 4 comportent deux convertisseurs longueur d'onde/tension 61, 62, qui convertissent respectivement le signal $\lambda_s$(t) et le signal généré par le générateur de chaos 7 en des signaux de tension.

Ces tensions sont mélangées dans un soustracteur électronique 63. Celui-ci délivre un signal d'erreur qui, après amplification par le bloc de régulation 64, est injecté dans le générateur de chaos local 7 pour le maintenir synchrone avec le signal chaotique $\lambda_s$(t).

Le générateur de chaos local 7 est identique au générateur 3 illustré sur la figure 2. Le signal d'erreur est appliqué sur le générateur 7 au point où se fait le mélange du signal de chaos et du signal codé sur le générateur 3 (par exemple, sommateur 37 sur la figure 2).

Les convertisseurs longueur d'onde/tension 61 et 62 sont par exemple constitués par des filtres optiques dont la transmission est linéaire en fonction de la longueur d'onde.

En variante encore, ainsi qu'on l'a illustré sur la figure 5, le signal s(t) peut être superposé au chaos par modulation de phase sur le signal de chaos en longueur d'onde λ(t) émis par le générateur 3.

Le signal de chaos en sortie du générateur 3 est à cet effet envoyé sur un modulateur de phase 2 au niveau duquel le signal s(t) est appliqué au chaos en longueur d'onde.

Les moyens de réception 4 sont alors constitués par des moyens de détection par hétérodynage optique. Ils comprennent un module de synchronisation 5 et un générateur de chaos local 7 identiques à ceux de la figure 4.

Il comporte également des moyens 6 d'hétérodynage optique qui reçoivent en entrée d'une part le signal optique correspondant au chaos d'émission modulé en phase par s(t) et d'autre part le chaos local synchrone en longueur d'onde du générateur 7.

Ces moyens d'hétérodynage restituent le signal s(t).

On se réfère maintenant à la figure 6 sur laquelle on a représenté une autre variante de générateur de chaos possible pour l'invention.

Le générateur illustré sur cette figure est un générateur de chaos tout optique qui peut être utilisé à la place du générateur de la figure 2.

Il comprend une diode laser accordable en longueur d'onde 33 reliée par une fibre optique 31 utilisée comme ligne à retard T à un interféromètre de Mach Zender 32 terminé à son extrémité opposée à la fibre 31 par une face réfléchissante 35.

La longueur d'onde d'émission λ(t) en sortie de la diode 33 est fonction de l'intensité $I_\lambda$(t) du faisceau optique en entrée de ladite diode, qui correspond à celui initialement émis, mais ayant traversé la non linéarité optique 32 que constitue l'interféromètre de Mach Zender et ayant été retardé par la ligne à retard 31.

L'interféromètre de Mach Zender 32 constitue l'élément non linéaire en longueur d'onde.

Le signal s(t) peut être mélangé au chaos soit par modulation du courant de commande de la diode laser 33, soit par modulation de la tension de commande de l'interféromètre de Mach Zender 32.

L'avantage d'un tel générateur de chaos tout optique réside dans ses constantes de temps très faibles (∼10 ps) et donc dans sa capacité à coder des signaux de très haut débit (10 GHz).

La figure 7 illustre un exemple de chaos en longueur d'onde qui peut être obtenu avec un générateur tel qu'illustré sur la figure 2 ou sur la figure 5.

On a porté sur le graphe de la non linéarité de la figure 3 les lieux possibles d'évolution de ce chaos. Ceux-ci peuvent se situer soit sur la partie concave d'un lobe de la non linéarité, soit sur sa partie convexe.

Or, la plage totale Δλ d'accord d'un laser multisegment est généralement très supérieure à la largeur $\delta\lambda = \lambda_2$-

$\lambda_1$ d'un lobe de non-linéarité.

Il est donc possible de réaliser un codage sur plusieurs canaux, en attribuant à chaque canal un lobe de la plage d'accordabilité. Chaque canal sera ainsi centré sur une longueur d'onde donnée $\lambda_{01}$, $\lambda_{02}$, ..., $\lambda_{0n}$.

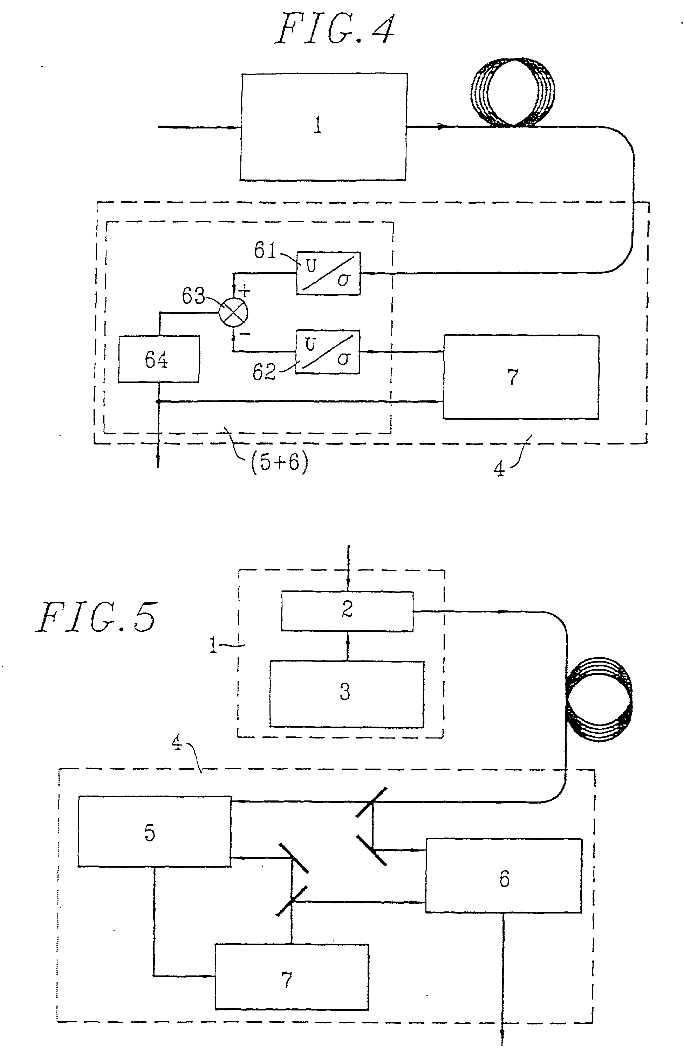

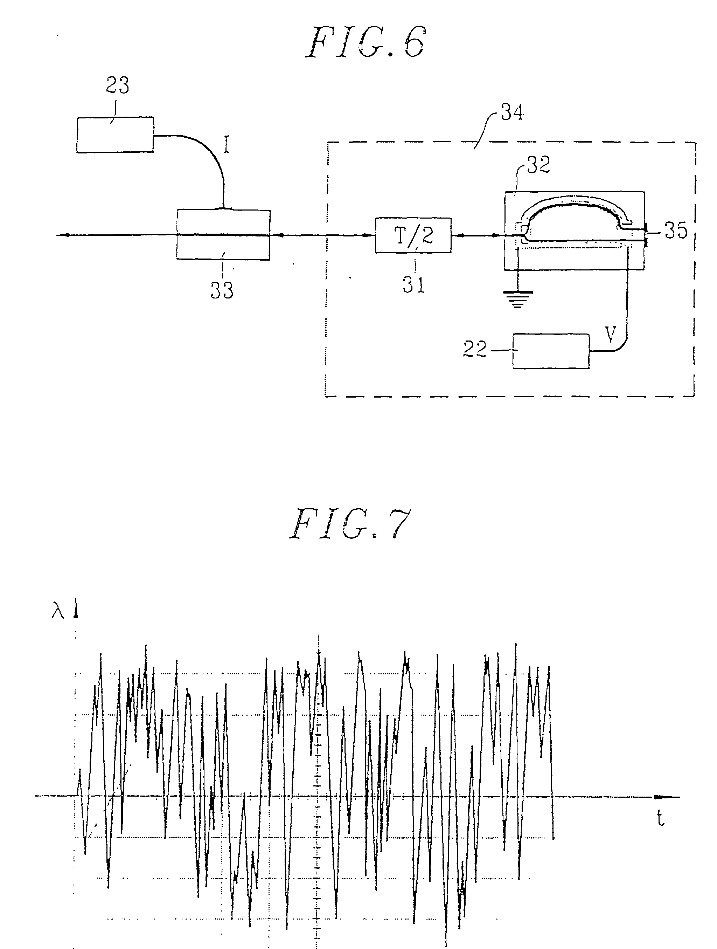

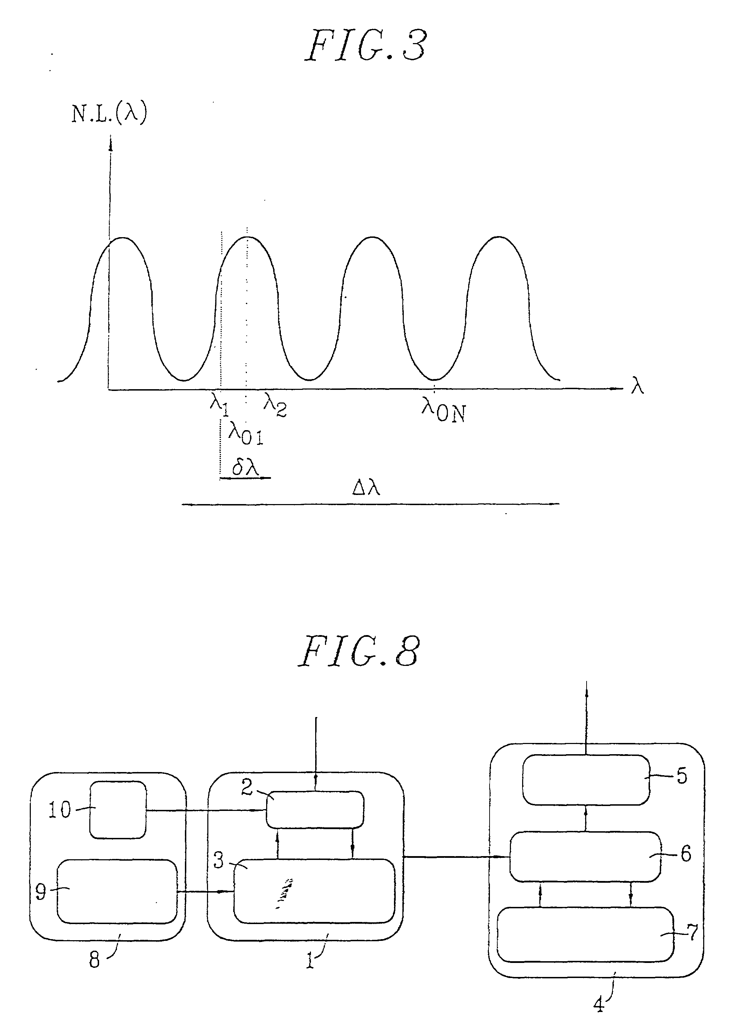

La figure 8 est un schéma illustrant un système de codage multicanaux par chaos en longueur d'onde.

Le système comprend le système d'émission 1 tel que décrit précédemment, piloté par une unité 8 pour la gestion d'un cryptage multicanaux en longueur d'onde.

Cette unité 8 permet de modifier les points de fonctionnement du système 1, c'est-à-dire d'une part de modifier la longueur d'onde centrale du chaos d'émission ($\lambda_{0k}$), et d'autre part de modifier la clé de cryptage.

Il comporte à cet effet un commutateur de longueur d'onde 9 qui délivre différents niveaux de courant sur les électrodes de la diode 33 du générateur de chaos de la figure 2. Ces courants commutent la longueur d'onde centrale autour de laquelle le chaos évolue.

L'unité 8 comporte également un commutateur de clé 10 qui commande l'un des éléments de la boucle de commande de la diode laser 33 de façon à modifier l'un des paramètres du chaos, donc la clé de cryptage, en fonction du canal utilisé. Par exemple, l'unité 10 peut faire varier le gain K de l'amplificateur 36 en fonction du canal utilisé. Elle peut également faire varier la non linéarité de l'élément non linéaire 32, par exemple par effet thermique, électrooptique, piézoélectrique, optique.

Bien entendu, il est également possible de prévoir des moyens pour modifier la clé de cryptage pour un système de transmission monocanal.

On notera que le système de transmission qui vient d'être décrit ne nécessite pas à la réception l'accrochage sur la valeur absolue de la longueur d'onde d'émission, mais uniquement sur la variation relative de celle-ci. Cela entraîne une grande souplesse de décodage, en vue de la sélection de l'un ou l'autre des canaux codés, avec bien sûr, la condition de connaître la clé de codage (éléments, et paramètres de ces éléments).

**Revendications**

1. Système pour la transmission d'un signal optique porteur d'informations, comportant :

   - des moyens (1) pour l'émission d'un signal optique crypté, qui comprennent des moyens (3) pour la génératior d'un chaos déterministe, ainsi que des moyens (2) pour le codage du signal porteur d'informations, par ce chaos déterministe,
   - une ligne (F) pour la transmission du signal ainsi crypté,
   - des moyens de réception (4) qui comprennent des moyens (7) pour la génération d'un chaos déterministe, ainsi que des moyens (5, 6)) pour la synchronisation de ce chaos sur 'le signal crypté reçu et pour le décryptage dudit signal crypté,

   **caractérisé en ce que** le chaos est un chaos en longueur d'onde, les moyens (3, 7) de génération de chaos comportant une source lumineuse accordable en longueur d'onde (33), ainsi qu'une boucle (34) de contre-réaction du signal lumineux en sortie de ladite source sur la commande d'accord en longueur d'onde, ladite boucle (34) comportant des moyens (32) de conversion non linéaires de la longueur d'onde, ainsi qu'une ligne à retard (31), la longueur d'onde, ainsi qu'une ligne à retard (31), le système comportant en outre des moyens pour modifier les paramètres de la boucle de contre-réaction (34), et ainsi modifier la clef de cryptage.

2. Système selon la revendication 1, **caractérisé en ce que** la source lumineuse (33) est commandée par un paramètre électrique et **en ce que** la boucle de contre-réaction (34) est optoélectronique.

3. Système selon la revendication 1, **caractérisé en ce que** la commande de la source lumineuse (33) et la boucle de contre-réaction (34) sont tout optiques.

4. Système selon la revendication 2 ou 3, **caractérisé en ce que** les moyens non linéaires (32) comportent un élément d'absorption ou d'émission à extrema en fonction de la longueur d'onde, tel qu'un interféromètre à deux ondes, un interféromètre de Mach Zender, un interféromètre de Fabry-Perot, un cristal biréfringent ou un interféromètre à ondes multiples.

5. Système selon l'une quelconque des revendications 1 à 4, **caractérisé en ce que** les moyens de codage comportent des moyens (37) pour mélanger le signal porteur d'informations au signal qui se propage dans la boucle de contre réaction (34) pour produire un chaos $\lambda_s(t)$ contenant le signal à transmettre.

**6.** Système selon l'une quelconque des revendications 1 à 4, **caractérisé en ce que** les moyens de codage (2) comportent un modulateur de phase, qui réalise une modulation en phase du chaos émis en longueur d'onde, par le signal porteur d'informations.

**7.** Système selon l'une des revendications précédentes, **caractérisé en ce que** les moyens (3, 7) de génération de chaos d'émission et de réception sont identiques.

**8.** Système selon l'une des revendications précédentes, **caractérisé en ce que** les moyens pour modifier les paramètres de la boucle de contre-réaction (34) sont des moyens pour modifier la non-linéarité des moyens de conversion ou la valeur du retard.

**9.** Système selon l'une des revendications précédentes, **caractérisé en ce qu'**il comporte plusieurs canaux.

**10.** Dispositif d'émission d'un signal optique crypté, **caractérisé en ce qu'**il comporte des moyens de génération de chaos en longueur d'onde, ces moyens comportant une source lumineuse accordable en longueur d'onde, ainsi qu'une boucle de contre-réaction (34) du signal lumineux en sortie de ladite source sur la commande d'accord en longueur d'onde, ladite boucle comportant des moyens de conversion non linéaires de la longueur d'onde, ainsi qu'une ligne à retard, et **en ce qu'**il est associé à des moyens pour modifier des paramètres de la boucle de contre-réaction (34), et ainsi modifier la clef de cryptage.

**Claims**

**1.** A system for transmitting an optical signal carrying information, the system comprising:

- transmitter means (1) for emitting an encrypted optical signal, said means comprising means (3) for generating deterministic chaos and means (2) for encoding the information-carrying signal by said deterministic chaos;
- a line (F) for conveying the signal encrypted in this way; and
- receiver means (4) comprising means (7) for generating deterministic chaos, and means (5, 6) for synchronizing said chaos with the received encrypted signal and for decrypting said encrypted signal;

  **characterized in that** the chaos is wavelength chaos, the means (3, 7) for generating chaos including a wavelength tunable light source (33) and a feedback loop (34) for feeding the light signal output by said source back to the wavelength tuning control, said loop (34) including means (32) for non-linear wavelength conversion, and a delay line (31), the system further comprising means for modifying the parameters of the feedback loop (34), thereby modifying the encrypting key.

**2.** A system according to claim 1, **characterized in that** the light source (33) is controlled by an electrical parameter, and **in that** the feedback loop (34) is optoelectronic.

**3.** A system according to claim 1, **characterized in that** the light source control (33) and the feedback loop (34) are all-optical.

**4.** A system according to claim 2 or 3, **characterized in that** the non-linear means (32) include an absorption or emission element having extrema as a function of wavelength, such as a two-wave interferometer, a Mach-Zender interferometer, a Fabry-Perot interferometer, a birefringent crystal, or a multiple wavelength interferometer.

**5.** A system according to any one of claims 1 to 4, **characterized in that** the encoding means include means (37) for mixing the information-carrying signal with the signal propagating in the feedback loop (34) to produce chaos $\lambda_s(t)$ containing the signal to be transmitted.

**6.** A system according to any one of claims 1 to 4, **characterized in that** the encoding means (2) include a phase modulator which phase modulates the emitted wavelength chaos by the information-carrying signal.

**7.** A system according to any preceding claim, **characterized in that** the transmitter and receiver means (3, 7) for generating chaos are identical.

**8.** A system according to any preceding claim, **characterized in that** the means for modifying the parameters of the feedback loop (34) are means for modifying the non-linearity of the conversion means or the value of the delay.

9. A system according to any preceding claim, **characterized in that** it includes a plurality of channels.

10. Transmitter apparatus for transmitting an encrypted optical signal, said apparatus being **characterized in that** it includes wavelength chaos generator means, said means including a wavelength tunable light source and a feedback loop (34) for feedback of the light signal output by said source to the wavelength tuning control, said loop including non-linear conversion means for the wavelength, and a delay line, and said apparatus being **characterized in that** it is associated to means for modifying the parameters of the feedback loop (34), thereby modifying the encrypting key.

**Patentansprüche**

1. System für die Übertragung eines optischen Informationsträgersignals, das folgendes umfaßt:

   - Mittel (1) für die Emission eines verschlüsselten optischen Signals, die Mittel (3) für die Erzeugung eins deterministischen Chaos aufweisen, sowie Mittel (2) für die Kodierung des Informationsträgersignals mittels dieses deterministischen Chaos,
   - eine Leitung (F) für die Übertragung des so verschlüsselten Signals,
   - Empfangsmittel (4), die Mittel (7) für die Erzeugung eines deterministischen Chaos aufweisen, sowie Mittel (5,6) für die Synchronisation dieses Chaos mit dem empfangenen verschlüsselten Signal und für die Entschlüsselung des verschlüsselten Signals,

   **dadurch gekennzeichnet, daß** das Chaos ein Wellenlängenchaos ist, die Chaoserzeugungsmittel (3,7) eine in der Wellenlänge abstimmbare Lichtquelle (33) umfassen, sowie einer Schleife (34) für die Gegenkopplung des Lichtsignals am Ausgang der Quelle mit der Steuerung für die Wellenlängenabstimmung, wobei die Schleife (34) in der Wellenlänge nichtlineare Umwandlungsmittel (32) umfaßt, sowie eine Verzögerungsleitung (31), und das System zudem Mittel zum Modifizieren der Parameter der Gegenkopplungsschleife (34) und somit zum Modifizieren des Verschlüsselungsschlüssels umfaßt.

2. System nach Anspruch 1, **dadurch gekennzeichnet, daß** die Lichtquelle (33) mittels eines elektrischen Parameters gesteuert wird, und daß die Gegenkopplungsschleife (34) optoelektronisch ist.

3. System nach Anspruch 1, **dadurch gekennzeichnet, daß** die Steuerung der Lichtquelle (33) und der Gegenkopplungsschleife (34) vollständig optisch ist.

4. System nach Anspruch 2 oder 3, **dadurch gekennzeichnet, daß** die nicht-linearen Mittel (32) ein wellenlängenabhängiges Spitzenwert-Absorptions- oder -Emissionselement, wie ein Zweiwellen-Interferometer, ein Mach-Zender-Interferometer, ein Fabry-Perot-Interferometer, ein doppelbrechender Kristall oder ein Vielwellen-Interferometer umfaßt.

5. System nach einem der Ansprüche 1 bis 4, **dadurch gekennzeichnet, daß** die Kodierungsmittel Mittel (37) zum Mischen des Informationsträgersignals mit dem Signal umfassen, das sich in der Gegenkopplungsschleife (34) ausbreitet, um ein Chaos $\lambda_s(t)$ zu erzeugen, das das zu übertragende Signal enthält.

6. System nach einem der Ansprüche 1 bis 4, **dadurch gekennzeichnet, daß** die Kodierungsmittel (2) einen Phasenmodulator umfassen, der eine Phasenmodulation des ausgesandten Wellenlängenchaos mittels des Informationsträgersignals erzeugt.

7. System nach einem der vorstehenden Ansprüche, **dadurch gekennzeichnet, daß** die Emission- und Empfang-Chaoserzeugungsmittel (3,7) identisch sind.

8. System nach einem der vorstehenden Ansprüche, **dadurch gekennzeichnet, daß** die Mittel zum Modifizieren der Parameter der Gegenkopplungsschleife (34) Mittel zum Modifizieren der Nichtlinearität der Umwandlungsmittel oder des Verzögerungswertes sind.

9. System nach einem der vorstehenden Ansprüche, **dadurch gekennzeichnet, daß** es mehrere Kanäle umfaßt.

**10.** Vorrichtung für die Emission eines verschlüsselten optischen Signals, **dadurch gekennzeichnet, daß** es Mittel für die Erzeugung eines Wellenlängenchaos umfaßt, wobei diese Mittel eine in der Wellenlänge abstimmbare Lichtquelle umfassen, sowie eine Schleife (34) für die Gegenkopplung des Lichtsignals am Ausgang der Quelle mit der Steuerung für die Wellenlängenabstimmung, wobei die Schleife in der Wellenlänge nichtlineare Umwandlungsmittel umfaßt, sowie eine Verzögerungsleitung, und daß sie Mitteln zum Modifizieren von Parametern der Gegenkopplungsschleife (34) und somit zum Modifizieren des Verschlüsselungsschlüssels zugeordnet ist.

*FIG.1*

*FIG.2*

# FIG.4

# FIG.5

*FIG.6*

*FIG.7*

# FIG.3

# FIG.8